# EUROPEAN PATENT APPLICATION

(11) **EP 3 930 063 A1**
(43) Date of publication of application: **29.12.2021**
(21) Application number: 21171075.1
(22) Date of filing: 29.04.2021
(51) Int. Cl.: H01M 10/04, H01M 10/0587, H01M 50/109, H01M 50/148, H01M 50/152, H01M 50/153, H01M 50/171, H01M 50/181, H01M 50/188, H01M 50/559, H01M 50/107, H01M 50/169

(54) **RECHARGEABLE BATTERY**

(30) Priority: 22.06.2020 KR 20200075881
(71) Applicant: Samsung SDI Co., Ltd., Yongin-si, Gyeonggi-do 17084 (KR)
(72) Inventor: Ko, Heejung, 17084 Yongin-si, Gyeonggi-do (KR); Kim, Kijung, 17084 Yongin-si, Gyeonggi-do (KR); Park, Yongjin, 17084 Yongin-si, Gyeonggi-do (KR); Woo, Byongchul, 17084 Yongin-si, Gyeonggi-do (KR); Lee, Jong-Ha, 17084 Yongin-si, Gyeonggi-do (KR)
(74) Representative: Gulde & Partner

(57) **Abstract**

A rechargeable battery includes: an electrode assembly including a first electrode tab and a second electrode tab; a case including an opening and receiving the electrode assembly to be connected to the first electrode tab; a cap assembly including a cap plate coupled to the case and covering the opening, and a terminal plate coupled to the cap plate and connected to the second electrode tab; a first insulating member between the second electrode tab and the cap plate; a second insulating member attached to a surface of the second electrode tab; and a third insulating member between the second electrode tab and the electrode assembly.

## Description

### BACKGROUND

### 1. Field

Aspects of embodiments of the present invention relate to a rechargeable battery.

### 2. Description of the Related Art

A rechargeable battery can be repeatedly charged and discharged, unlike a primary battery that cannot be recharged. A low-capacity rechargeable battery is used for portable small-sized electronic devices, such as mobile phones, notebook computers, and camcorders. A large-capacity battery is widely used as a power source for driving motors, such as for hybrid vehicles.

A representative rechargeable battery includes a nickel-cadmium (Ni-Cd) battery, a nickel-hydrogen (Ni-MH) battery, a lithium (Li) battery, and a lithium ion (Li-ion) rechargeable battery. Particularly, the lithium ion secondary battery has a higher operation voltage than the nickel-cadmium battery or the nickel-hydrogen battery that is mainly used as a portable electric equipment power source by about three times. Also, the lithium ion secondary battery is widely used because its energy density per unit weight is high.

In particular, as a demand for wearable devices, such as headphones, earphones, smartwatches, and body-mounted medical devices which use Bluetooth, has increased, the demand for rechargeable batteries of which energy density is high and which are ultra-small is increasing.

The ultra-small rechargeable battery has important tasks of securing required electrical capacity within a limited size, implementing an efficient structure while improving an effective low weight, and improving structural stability.

The above information disclosed in this Background section is only for enhancement of understanding of the background of the invention, and, therefore, it may contain information that does not form the prior art that is already known in this country to a person of ordinary skill in the art.

### SUMMARY

According to an aspect of embodiments of the present invention, an ultra-small rechargeable battery is provided. According to another aspect of embodiments of the present invention, a rechargeable battery that prevents or substantially prevents damage to a separator due to heat at an upper part of an electrode assembly when laser-welding a cap assembly to a case is provided.

According to one or more embodiments, a rechargeable battery includes: an electrode assembly including a first electrode tab and a second electrode tab; a case including an opening and receiving the electrode assembly to be connected to the first electrode tab; a cap assembly including a cap plate coupled to the case and covering the opening, and a terminal plate coupled to the cap plate and connected to the second electrode tab; a first insulating member between the second electrode tab and the cap plate; a second insulating member attached to a surface of the second electrode tab; and a third insulating member between the second electrode tab and the electrode assembly.

The electrode assembly may include a first electrode, a second electrode, and a separator therebetween, the first electrode may be connected to the first electrode tab, and the second electrode may be connected to the second electrode tab.

The rechargeable battery may further include an insulating member between the cap plate and the terminal plate to electrically insulate the cap plate and the terminal plate from each other.

The terminal plate may include: a flange part located outside the cap plate and electrically insulated from and attached to an outer surface of the cap plate; and a tab connection part protruded from a center of the flange part to be protruded toward the electrode assembly through a terminal hole of the cap plate and a through hole of the first insulating member, and electrically connected to the second electrode tab at an inner surface of the tab connection part.

The first insulating member may include an insulating washer attached to an inner surface of the cap plate and having a through hole.

The second insulating member may include an insulating tape attached to a surface of the second electrode tab, a part of the tab connection part, and a part of the first insulating member.

The third insulating member may include an insulating disk attached to a center of an end of the electrode assembly and being larger than the inner surface of the tab connection part to be overlapped around the through hole of the first insulating member.

The terminal plate may include: a flange part between the cap plate and the electrode assembly and located at an inner side of a step of the first insulating member to be electrically insulated from and attached to an inner surface of the cap plate; and a protruded terminal protruded from a center of the flange part to penetrate a terminal hole of the cap plate and electrically connected to the second electrode tab at an inner surface of the terminal plate.

The first insulating member may include an insulated washer attached to the inner surface of the cap plate and including the step, and the flange part may be arranged at the step.

The second insulating member may include an insulating tape attached to a surface of the second electrode tab, a part of the protruded terminal, and a part of the first insulating member.

The third insulating member may include an insulating disk attached a center of an end of the electrode assembly and being larger than the inner surface of the flange part to be overlapped around the step of the first insulating member.

As described above, in a rechargeable battery according to one or more embodiments of the present invention, the first insulating member is arranged between the second electrode tab connected to the terminal plate and the cap plate, the second insulating member is attached to a surface of the second electrode tab, and the third insulating member is arranged between the second electrode tab and the electrode assembly, such that the separator may be prevented or substantially prevented from being damaged by heat at an upper part of the electrode assembly when laser-welding the cap assembly to the case.

### BRIEF DESCRIPTION OF THE DRAWINGS

FIG. 1 is a perspective view of a rechargeable battery according to an embodiment of the present invention.
FIG. 2 is an exploded perspective view of the rechargeable battery of FIG. 1.
FIG. 3 is a cross-sectional view taken along the line III-III of FIG. 1.
FIG. 4 is a perspective view of a rechargeable battery according to an embodiment of the present invention.
FIG. 5 is an exploded perspective view of the rechargeable battery of FIG. 4.
FIG. 6 is a cross-sectional view taken along the line VI-VI of FIG. 4.

### DESCRIPTION OF REFERENCE SYMBOLS

| | |
|---|---|
| 1, 2: rechargeable battery | 10: electrode assembly |
| 11: first electrode | 12: second electrode |
| 13: separator | 20: case |
| 30, 60: cap assembly | 31: cap plate |
| 33, 63: terminal plate | 34: thermal-fusion member |
| 51: first electrode tab | 52: second electrode tab |
| 61, 62: first insulating member | 101, 102: first, second end |
| 311: terminal hole | 331, 631: flange part |
| 332: protruded terminal | 341: through hole |
| 611: through hole | 612, 622: second insulating member |
| 613, 623: third insulating member | 621: step |
| 632: tab connection part | D: battery diameter |
| H: height | L1, L2: distance |
| ΔH1: first height difference | ΔH2: second height difference |

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

In addition, unless explicitly described to the contrary, it is to be understood that terms such as "comprises," "includes," or "have" used in the present specification specify the presence of stated features, numerals, steps, operations, components, parts, or a combination thereof, but do not preclude the presence or addition of one or more other features, numerals, steps, operations, components, parts, or a combination thereof.

Also, in this specification, it is to be understood that when one component is referred to as being "connected" or "coupled" to another component, it may be connected or coupled directly to the other component or connected or coupled to another component with one or more other components intervening therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

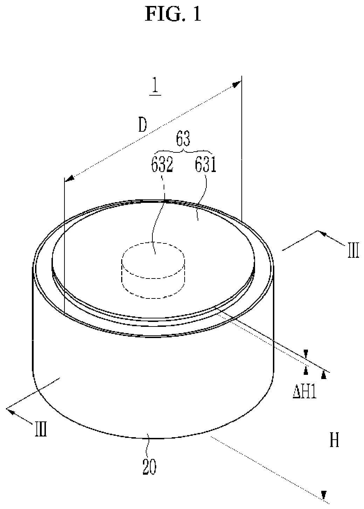

A rechargeable battery according to an embodiment of the present invention, which is an ultra-compact battery, may be a coin cell or a button cell. Here, the coin cell or the button cell is a thin coin-type or button-type cell, and refers to a battery having a ratio H/D of a height H to a diameter D of 1 or less (see FIG. 1). The ratio H/D may be 0.9 or less, or 0.8 or less.

In an embodiment, the coin cell or the button cell is mainly cylindrical, and its horizontal cross-section is circular, but the present invention is not limited thereto, and the horizontal cross-section may be oval or polygonal. In this case, a diameter is determined as a maximum distance of a case exterior circumference based on the horizontal direction of the battery, and a height is determined as a maximum distance (a distance from a flat bottom to a flat top) based on the vertical direction of the battery.

However, the present invention is not limited to the coin cell or the button cell that is an example of the present invention, and a battery of the present invention may be a cylindrical-type or pin-type battery. Herein, a case in which a rechargeable battery according to an embodiment of the present invention is a coin cell or a button cell will be described as an example in further detail.

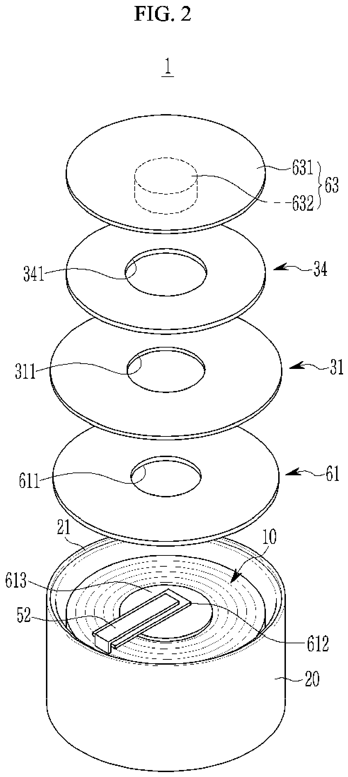

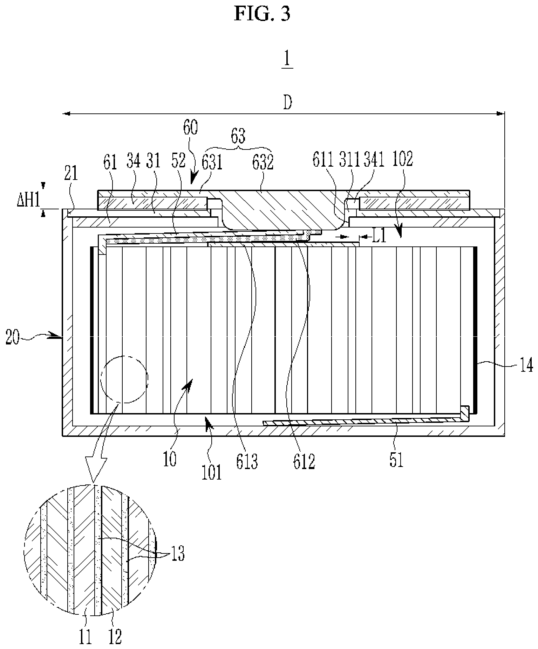

FIG. 1 is a perspective view of a rechargeable battery according to an embodiment of the present invention; FIG. 2 is an exploded perspective view of the rechargeable battery of FIG. 1; and FIG. 3 is a cross-sectional view taken along the line III-III of FIG. 1.

Referring to FIG. 1 to FIG. 3, a rechargeable battery 1 according to an embodiment includes an electrode assembly 10, a case 20, a cap assembly 60, and first, second, and third insulating members 61, 612, and 613.

The cap assembly 60 includes a cap plate 31 and a terminal plate 63 that are coupled, preferably directly coupled to each other. As an example, the cap plate 31 and the terminal plate 63 are thermally fused by a thermal-fusion member 34 disposed, preferably directly connected to them and disposed therebetween.

The thermal-fusion member 34 acts as a medium to connect the cap plate 31 and the terminal plate 63 to each other. For example, the thermal-fusion member 34 may be formed of an electrically insulating material, such as a polymer, and may be melted using a laser or the like to be fused, preferably directly fused to the cap plate 31 and the terminal plate 63, but the present invention is not limited thereto.

In an embodiment, by coupling, preferably directly coupling the terminal plate 63 to the cap plate 31 with the thermal-fusion member 34, it is possible to form a stable coupling structure while effectively insulating between the terminal plate 63 and the cap plate 31 without adding a separate insulating configuration.

Since a coin cell is manufactured in an ultra-compact size, it may have a design limitation in terms of space, and, accordingly, it is desired to secure functionality while simplifying a structure and a manufacturing process thereof. Regarding this, in the embodiment, insulation and coupling, preferably directly coupling, between the terminal plate 63 and the cap plate 31 through the heat-fusion member 34 are realized.

In an embodiment, the electrode assembly 10 includes a first electrode 11 (for example, a negative electrode) and a second electrode 12 (for example, a positive electrode) provided at respective sides of a separator 13 that is an electrically insulating material, and is formed by winding the first electrode 11, the separator 13, and the second electrode 12. Therefore, the electrode assembly 10 may be formed as a jelly roll type. In another embodiment, although not shown separately, the electrode assembly may be formed as a stack type.

The electrode assembly 10 is configured to charge and discharge a current, and a winding axis of the electrode assembly 10 may be arranged parallel to a height direction (a vertical direction in FIG. 1 to FIG. 3) of the case 20. In an embodiment, a first end (a lower surface of the electrode assembly) 101 and a second end (an upper surface of the electrode assembly) 102 of the electrode assembly 10 may be flat and parallel to each other. In an embodiment, the electrode assembly 10 is not provided with a center pin, but, in another embodiment, a center pin (not shown) may be provided at a position of the winding axis.

The case 20 accommodates the electrode assembly 10 while facing the first end 101 of the electrode assembly 10. In an embodiment, the electrode assembly 10 is covered with an insulating sheet 14 and embedded in the case 20. As an example, the case 20 is formed as a cylinder that accommodates the jelly roll type of electrode assembly 10, and the cap assembly 60 seals an opening 21 of the cylindrical case 20.

The electrode assembly 10 includes a first electrode tab 51 connected to the first electrode 11, and a second electrode tab 52 connected, preferably directly connected to the second electrode 12, and the first and second electrodes 11 and 12 are drawn out at the first and second ends 101 and 102, respectively, but the present invention is not limited thereto.

In a state in which the electrode assembly 10 is accommodated in the case 20, the first electrode tab 51 is electrically connected, preferably directly electrically connected to a bottom of the case 20 and the second electrode tab 52 is electrically connected, preferably directly electrically connected to the terminal plate 63 of the cap assembly 60, but the present invention is not limited thereto.

In addition, the cap plate 31 of the cap assembly 60, while facing the second end 102 of the electrode assembly 10, is coupled to the case 20 to cover the opening 21, but the present invention is not limited thereto. In an embodiment, the terminal plate 63 is coupled to the second electrode tab 52 while being coupled to the cap plate 31 with the thermal-fusion member 34.

Herein, a case in which the first electrode 11 and the second electrode 12 are respectively a negative electrode and a positive electrode will be described as an example, but the present invention is not limited thereto, and the first electrode 11 and the second electrode 12 may respectively be a positive electrode and a negative electrode.

In an embodiment, the first electrode (negative electrode) 11 is formed in a long extending strip shape, and includes a negative coated portion that is a region in which a negative active material layer is coated to a current collector of a metal foil (for example, a Cu foil), and a negative uncoated portion that is a region in which an active material is not coated. The negative uncoated portion may be disposed at an end portion in a length direction of the negative electrode.

In an embodiment, the second electrode (the positive electrode) 12 is formed in a long extending strip shape, and includes a positive coated portion that is a region in which a positive active material layer is coated to a current collector of a metal foil (for example, an AI foil), and a positive uncoated portion that is a region in which an active material is not coated. The positive uncoated portion may be disposed at an end portion in a length direction of the positive electrode.

The case 20 allows the electrode assembly 10 to be inserted into the opening 21 formed at a side thereof, and has a space for accommodating the electrode assembly 10 and an electrolyte therein. In an embodiment, for example, the case 20 is formed in a cylindrical shape having a height H that is less than a diameter D thereof, and has a circular opening 21 such that the cylindrical electrode assembly 10 corresponding to an inner space thereof may be inserted.

The terminal plate 63 of the cap assembly 60 includes a flange part 631 and a tab connection part 632. The flange part 631 is disposed on the outside of the cap plate 31 and is electrically insulated and attached to an outer surface of the cap plate 31 via the thermal-fusion member 34.

In the terminal plate 63, the tab connection part 632 is protruded from a center of the flange part 631 to the inside and penetrates through a through hole 341 of the thermal-fusion member 34 and a terminal hole 311 of the cap plate 31 to be protruded toward the electrode assembly 10, and the second electrode tab 52 is electrically connected to an inner surface of the tab connection part 632, but the present invention is not limited thereto.

The flange part 631 is more protruded with a first height difference ΔH1 than the outer surface of the cap plate 31 to form an outer surface of the rechargeable battery 1. In other words, the outer surface of the flange part 631 is more protruded with reference to a bottom of the case 20 than the outer surface of cap plate 31. Also, the outer surface of flange part 631 and the outer surface of the cap plate 31 have the first height difference ΔH1. However, the present invention is not limited thereto.

Herein, the first, second, and third insulating members 61, 612, and 613 are described. The first insulating member 61 is formed between the second electrode tab 52 and the cap plate 31. As an example, the first insulating member 61 is disposed on, preferably directly disposed on an upper side of the second electrode tab 52 and attached to, preferably directly attached to an inner surface of the cap plate 31. The first insulating member 61 may form an electrically insulating structure between the cap plate 31 and the second electrode tab 52 and between the cap plate 31 and the electrode assembly 10.

As an example, the first insulating member 61 may be formed of an insulating washer having a through hole 611 corresponding to the terminal hole 311 of the cap plate 31. Therefore, the tab connection part 632 is protruded from the center of the flange part 631 to the inside, penetrates through the terminal hole 311 of the cap plate 31 and the through hole 611 of the first insulating member 61 to be protruded toward the electrode assembly 10, and is electrically connected to, preferably directly electrically connected to the second electrode tab 52 at an inner surface thereof.

The second insulating member 612 is attached to, preferably directly attached to a surface of the second electrode tab 52. As an example, the second insulating member 612 is attached to, preferably directly attached to an underside of the second electrode tab 52. As an example, the second insulating member 612 may be formed of an insulating tape attached to, preferably directly attached to the surface of the second electrode tab 52, a part of the tab connection part 632, and a part of the first insulating member 61. The second insulating member 612 may form an electrically insulating structure between the second electrode tab 52 and the second end 102 of the electrode assembly 10.

The third insulating member 613 is formed between the second electrode tab 52 and the electrode assembly 10. As an example, the third insulating member 613 is attached to, preferably directly attached to the second end 102 of the electrode assembly 10 at the side of the second electrode tab 52. As an example, the third insulating member 613 is attached to, preferably directly attached to a center of the second end 102 of the electrode assembly 10 and may be formed of an insulating disk that is larger than the inner surface of the tab connection part 632 so as to be overlapped by a distance (e.g., a predetermined distance) L1 around the through hole 611 of the first insulating member 61.

The first and second insulating members 61 and 612 electrically insulate both sides of the second electrode tab 52 from the cap plate 31 and the electrode assembly 10. In addition, the third insulating member 613 may further electrically insulate the second electrode tab 52 and the electrode assembly 10 in the opened portion of the electrode assembly 10 on the second end 102 despite the use of the first and second insulating members 61 and 612.

Referring to FIG. 1, in the rechargeable battery 1 according to an embodiment, in a state that the opening 21 of the case 20 is closed and sealed by the cap assembly 60, the height H is set as the distance between the case 20 and an outer plane of the flange part 631, and the diameter D of the battery is set as the exterior circumference of the case 20. In an embodiment, a ratio of the height H to the battery diameter D is 1 or less (H/D ≤ 1). Therefore, the rechargeable battery 1 according to the embodiment is a coin-type battery or a button-type battery and may form a thin coin or button shape.

Herein, another embodiment of the present invention is described. By comparing the first and second embodiments, the description for the same configurations may be omitted, and different configurations are mainly described regarding the second embodiment.

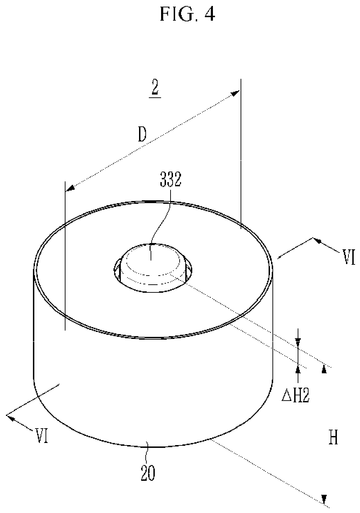

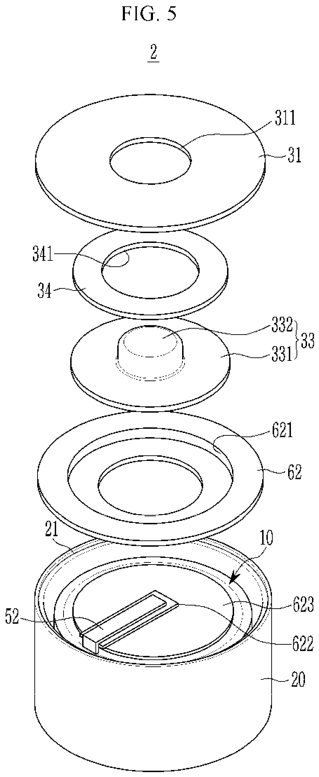

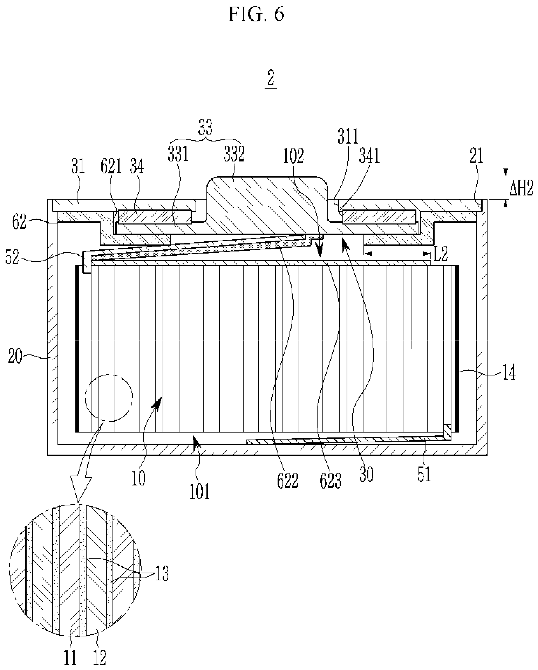

FIG. 4 is a perspective view showing a rechargeable battery according to an embodiment of the present invention; FIG. 5 is an exploded perspective view of the rechargeable battery of FIG. 4; and FIG. 6 is a cross-sectional view taken along the line VI-VI of FIG. 4.

Referring to FIG. 4 to FIG. 6, in a cap assembly 30, a terminal plate 33 includes a flange part 331 and a protruded terminal 332. The rechargeable battery according to an embodiment further includes an insulating member that is disposed between the cap plate 31 and the terminal plate 33 to electrically insulate the cap plate 31 and the terminal plate 33 from each other.

The flange part 331 is disposed between the cap plate 31 and the electrode assembly 10, is disposed inside a step 621 of a first insulating member 62, and is electrically insulated from and attached to an inner surface of the cap plate 31 via an insulating member. As an example, the insulating member may be formed of a thermal-fusion member 34.

In the terminal plate 33, the protruded terminal 332 is protruded from a center of the flange part 331 to the outside through a through hole 341 of the thermal-fusion member 34 and a terminal hole 311 of the cap plate 31, and an inner surface of the terminal plate 33 (e.g., an inner surface of the protruded terminal 332) is electrically connected to the second electrode tab 52. The second electrode tab 52 may be connected to the inner surface of the flange part 331 or the inner surface of the protruded terminal 332, or both.

The protruded terminal 332 is protruded more with a second height difference ΔH2 than an outer surface of the cap plate 31 to form an outer surface of the rechargeable battery 2. That is, the outer surface of the protruded terminal 332 is more protruded than the outer surface of the cap plate 31 with reference to a bottom of the case 20, and the outer surface of the protruded terminal 332 and the outer surface of the cap plate 31 have the second height difference ΔH2.

Herein, first, second, and third insulating members 62, 622, and 623 are described. The first insulating member 62 is disposed on, preferably directly disposed on an upper side of the second electrode tab 52 and is attached to the inner surface of the cap plate 31 to further extend to the inner surface of the flange part 331. The first insulating member 62 may form an electrically insulating structure between the cap plate 31 and the second electrode tab 52, between the cap plate 31 and the electrode assembly 10, and between the flange part 331 and the electrode assembly 10.

As an example, the first insulating member 62 may be formed of an insulating washer having a step 621 corresponding to the exterior diameter of the thermal-fusion member 34. Therefore, the protruded terminal 332 is protruded from the center of the flange part 331 to the outside, is protruded toward the outside through the through hole 341 of the thermal-fusion member 34 and the terminal hole 311 of the cap plate 31, and is electrically connected to, preferably directly electrically connected to the second electrode tab 52 at the inner surface of the terminal plate 33.

The second insulating member 622 is attached to, preferably directly attached to a lower side of the second electrode tab 52. As an example, the second insulating member 622 may be formed of an insulating tape attached to a surface of the second electrode tab 52, a part of the protruded terminal 332, and a part of the first insulating member 62. The second insulating member 622 may form an electrically insulating structure between the second electrode tab 52 and the second end 102 of the electrode assembly 10.

The third insulating member 623 is attached to, preferably directly attached to the second end 102 of the electrode assembly 10 at a side of the second electrode tab 52. As an example, the third insulating member 623 may be attached to, preferably directly attached to a center of the second end 102 of the electrode assembly 10 and may be formed of an insulating disk that is larger than the inner surface of the flange part 331 so as to be overlapped by a distance (e.g., a predetermined distance) L2 around the step 621 of the first insulating member 62.

The first and second insulating members 62 and 622 electrically insulate both sides of the second electrode tab 52 from the cap plate 31 and the electrode assembly 10. In addition, the third insulating member 623 may further electrically insulate the second electrode tab 52 and the electrode assembly 10 in the opened portion of the second end 102 of the electrode assembly 10 despite the use of the first and second insulating members 62 and 622.

Referring to FIG. 4, in the rechargeable battery 2 according to an embodiment, in a state in which the opening 21 of the case 20 is closed and sealed with the cap assembly 30, the height H is set as the distance between a bottom outer plane of the case 20 and the protruded terminal 332, and the battery diameter D is set as the exterior circumference of the case 20. In an embodiment, the ratio of the height H to the battery diameter D is 1 or less (H/D ≤ 1), 0.9 or less (H/D ≤ 0.9), or 0.8 or less (H/D ≤ 0.8). Therefore, the rechargeable battery according to an embodiment may have a thin coin or button shape as in a coin cell or a button cell.

While the present invention has been described in connection with what are presently considered to be some practical embodiments, it is to be understood that the invention is not limited to the disclosed embodiments. On the contrary, it is intended to cover various modifications and equivalent arrangements included within the scope of the appended claims.

## Claims

1. A rechargeable battery (1, 2) comprising:
an electrode assembly (10) comprising a first electrode tab (51) and a second electrode tab (52);
a case (20) comprising an opening (21) and receiving the electrode assembly (10) to be connected to the first electrode tab (51);
a cap assembly (30, 60) comprising a cap plate (31) coupled to the case (20) and covering the opening (21), and a terminal plate (33, 63) coupled to the cap plate (31) and connected to the second electrode tab (52);
a first insulating member (61, 62) between the second electrode tab (52) and the cap plate (31);
a second insulating member (612, 622) attached to a surface of the second electrode tab (52); and
a third insulating member (613, 623) between the second electrode tab (52) and the electrode assembly (10).

2. The rechargeable battery (1, 2) of claim 1, wherein
the electrode assembly (10) comprises a first electrode (11), a second electrode (12), and a separator (13) therebetween,
the first electrode (11) is connected to the first electrode tab (51), and
the second electrode (12) is connected to the second electrode tab (52).

3. The rechargeable battery (1, 2) of claim 2, further comprising an insulating member (61, 62) between the cap plate (31) and the terminal plate (33) to electrically insulate the cap plate (31) and the terminal plate (33, 63) from each other.

4. The rechargeable battery (1, 2) of claim 2, wherein the terminal plate (33, 63) comprises:
a flange part (331, 631) located outside the cap plate (31) and electrically insulated from and attached to an outer surface of the cap plate (31); and
a tab connection part (632) protruded from a center of the flange part (331, 631) to be protruded toward the electrode assembly (10) through a terminal hole (341) of the cap plate (31) and a through hole (341) of the first insulating member (61, 62), and electrically connected to the second electrode tab (52) at an inner surface of the tab connection part (632).

5. The rechargeable battery (1, 2) of claim 4, wherein the first insulating member (61, 62) comprises an insulating washer attached to an inner surface of the cap plate (31) and having a through hole (341).

6. The rechargeable battery (1, 2) of claim 5, wherein the second insulating member (612, 622) comprises an insulating tape attached to a surface of the second electrode tab (52), a part of the tab connection part (632), and a part of the first insulating member (61, 62).

7. The rechargeable battery (1, 2) of claim 5, wherein the third insulating member (613, 623) comprises an insulating disk attached to a center of an end (101, 102) of the electrode assembly (10) and being larger than the inner surface of the tab connection part (632) to be overlapped around the through hole (341) of the first insulating member (61, 62).

8. The rechargeable battery (2) of claim 2, wherein the terminal plate (33) comprises:
a flange part (331) between the cap plate (31) and the electrode assembly (10) and located at an inner side of a step (621) of the first insulating member (62) to be electrically insulated from and attached to an inner surface of the cap plate (31); and
a protruded terminal (332) protruded from a center of the flange part (331) to penetrate a terminal hole (311) of the cap plate (31) and electrically connected to the second electrode tab (52) at an inner surface of the terminal plate (33).

9. The rechargeable battery (2) of claim 8, wherein
the first insulating member (62) comprises an insulated washer attached to the inner surface of the cap plate (31) and comprising the step (621), and
the flange part (331) is arranged at the step (621).

10. The rechargeable battery (2) of claim 9, wherein the second insulating member (622) comprises an insulating tape attached to a surface of the second electrode tab (52), a part of the protruded terminal (332), and a part of the first insulating member (62).

11. The rechargeable battery (2) of claim 9, wherein the third insulating member (623) comprises an insulating disk attached to a center of an end (102) of the electrode assembly (10) and being larger than an inner surface of the flange part (331) to be overlapped around the step (621) of the first insulating member (62).
